# EUROPÄISCHE PATENTANMELDUNG

(11) **EP 3 575 362 A1**
(43) Veröffentlichungstag der Anmeldung: **04.12.2019**
(21) Anmeldenummer: 18174697.5
(22) Anmeldetag: 29.05.2018
(51) Int. Cl.: C08L 69/00

(54) **ABDECKUNGEN FÜR LED-LICHTQUELLEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft die Verwendung von verzweigten aliphatischen Kohlenwasserstoffen wie Squalan in auf thermoplastischem Polymer, insbesondere auf Polycarbonat, basierenden Zusammensetzungen, welche für die Herstellung von Formteilen verwendet werden, die in LED-Beleuchtungseinheiten eingesetzt werden, wie etwa Abdeckungen. Erfindungsgemäß wurde erkannt, dass bei Verwendung von verzweigten aliphatischen Kohlenwasserstoffen die Gesamttransmission und die Transmission im Bereich von 360 bis 460 nm gesteigert werden können, was entsprechende Zusammensetzungen als besonders geeignet für die Herstellung von Formteilen zur Nutzung in Kombination mit weißen LED-Lichtquellen macht. Es hat sich außerdem gezeigt, dass gleichzeitig die Vergilbung und Trübung reduziert werden.

## Beschreibung

Die Erfindung betrifft eine LED-Beleuchtungseinheit, umfassend eine LED-Lichtquelle und ein Formteil, etwa eine Abdeckung, aus thermoplastischem Material. Die Erfindung betrifft außerdem die Verbesserung der Lichttransmission des Abdeckmaterials im Bereich von 360 bis 460 nm.

Glühbirnen sind aufgrund ihres schlechten Wirkungsgrades hinsichtlich Lichtemission und hoher Wärmeentwicklung sowie der geringen Lebensdauer von Nachteil. Energiesparlampen sind deutlich energieeffizienter, jedoch stellen sie aufgrund von Schwermetallanteilen, insbesondere Quecksilber, eine hohe Umweltbelastung dar und müssen als Sondermüll entsorgt werden. Alternative Konzepte zu herkömmlichen Beleuchtungsquellen und -modulen, wie z.B. Glühbirnen oder Energiesparlampen, sind im Hinblick auf Nachhaltigkeit und Energieeffizienz gefragt.

Eine alternative Beleuchtungsquelle, die diese Nachteile nicht aufweist und zudem eine hohe Lebensdauer und hohe Energieeffizienz aufweist, bietet die Halbleiter-Technologie (als LED, OLED oder elektrolumineszierende Folie). Eine bevorzugte Verwendung der Halbleitertechnologie als Lichtquelle sind die LEDs.

Aufgrund ihrer hohen Lebensdauer, ihres geringen Energieverbrauchs und der guten Lichtausbeute finden LEDs als Beleuchtungsquellen vermehrt Anwendung, z.B. in der Automobilindustrie, der Luftfahrt, der Innenraumbeleuchtung, der Fassadengestaltung etc.

Im Gegensatz zu herkömmlichen Leuchtmitteln wie Glühbirnen oder Leuchtstoffröhren weisen LEDs eine von diesen verschiedene Abstrahlcharakteristik auf. Für Anwendungen, die eine Lenkung des Lichtstrahls erfordern, müssen bei LEDs oft Linsen oder Lichtleiter eingesetzt werden. Alternativ oder ergänzend hierzu enthalten Leuchtkörper mit LEDs als Lichtquelle in der Regel einen transparenten oder transluzenten Gehäuseteil, der zur Abdeckung der Lichtquelle dient, die Lichtquelle schützt und gegen äußeren Einflüsse wie Schmutz und Staub abschirmt.

LEDs strahlen Licht mit einer vom Halbleitermaterial und der Dotierung abhängigen Wellenlänge ab, so dass mit LEDs annähernd monochromatisches Licht, auch im Infrarotbereich oder UV-Bereich, erzeugt werden kann.

Zur Erzeugung von sichtbarem, weißem Licht, das bekanntlich eine Mischung unterschiedlicher Wellenlängen ist, muss daher das monochromatische Licht der LEDs "umgewandelt" werden (z.B. durch additive Farbmischung), was prinzipiell mit verschiedenen Mitteln möglich ist:
1. Farbmischung durch Kombination einer blauen, einer roten und einer grün abstrahlenden LED zu sogenannten RGB (Rot Grün Blau)-Modulen, deren kombinierter wahrgenommener Lichteindruck weiß ist.
2. Durch Lumineszenztechniken, bei denen die gesamte oder ein Teil der LED-Strahlung beispielsweise über Phosphore zu anderen Wellenlängen umgewandelt werden. So kann weißes Licht, ausgehend von einer im sichtbaren Bereich blau leuchtenden LED, durch Zusatz eines einzigen Phosphoren, der einen Teil der Strahlung im blauen Bereich in rot/gelbes Licht umwandelt, erzeugt werden. Diese Form der Erzeugung weißen Lichts ist für kommerzielle Anwendungen aus Kostengründen und aufgrund des hohen Wirkungsgrades von blauen LEDs bevorzugt. Alternativ kann aus mit LEDs erzeugtem UV-Licht mit Hilfe dreier unterschiedlicher Phosphore, die Wellenlängen entsprechend einem RGB-Modul emittieren, weißes Licht erzeugt werden. Sofern diese Technik angewandt wird, werden Zusammensetzungen bevorzugt, die auch eine erhöhte Stabilität gegenüber UV-Strahlung aufweisen, also beispielsweise mit einer UV-Stabilisierung versehen sind.

Zur Einstellung eines von "weiß" abweichenden Gesamtfarbeindrucks in LED-Modulen können die obigen Lichtquellen aber auch nach Bedarf noch weiter modifiziert werden. Diese Modifizierung kann beispielsweise erfolgen durch:
- Kombination mit einem Phosphoreszenzfarbstoff oder
- Kombination mit zusätzlichen Lichtquellen mit einer anderen Emissionscharakteristik.

Bei der Verwendung transparenter oder transluzenter Kunststoffe für Linsen, Lichtleiter, Abdeckungen oder andere Bauteile einer Beleuchtungseinrichtung steht die Stabilität gegenüber dem Licht der verwendeten Lichtquelle im Fokus. Die Wellenlänge des Lichts liegt bevorzugt in dem Bereich, der für das menschliche Auge sichtbar ist, da diese Beleuchtungseinrichtungen für den Gebrauch durch Menschen konzipiert sind. Eine Emission außerhalb des sichtbaren Bereiches bedeutet einen Verlust an Energie und somit eine herabgesetzte Effizienz der Lichtquelle. Es besteht Bedarf an einer transparenten oder transluzenten Kunststoffzusammensetzung, die eine hohe Farbstabilität und eine hohe Transmission gegenüber dem Emissionsspektrum einer solchen Lichtquelle besitzt. Dies bedeutet, dass insbesondere die Absorption im Bereich zwischen 360 und 460 nm -blaues Licht - gering sein muss, in der viele LED-Lichtquellen das meiste Licht emittieren, da jede Absorption in diesem Bereich zu einem Energieeintrag in das Material führt, was über längere Zeiträume zu Verfärbung, Eintrübung und ggf. Polymerabbau führt. Außerdem erfordert die Herstellung solcher Bauteile im Falle einer thermoplastischen Kunststoffzusammensetzung eine gute Fließfähigkeit, um komplexe Geometrien einfach fertigen zu können. Solche Bauteile sollen häufig über integrierte Elemente wie beispielsweise Steck- oder Schraubverbindungen mit den weiteren Elementen der Beleuchtungseinrichtung verbunden werden können und benötigen daher eine gute mechanische Beständigkeit. Ferner wird eine gute Wärmeformbeständigkeit benötigt, um die Gebrauchstemperaturen der Beleuchtungseinrichtung ohne Veränderungen der optischen, geometrischen oder anderen Eigenschaften dauerhaft zu bestehen.

Grundsätzlich können Linsen, Lichtleiter, transparente oder transluzente Abdeckungen und andere transparente oder transluzente Bauteile in Leuchtkörpern aus unterschiedlichsten transparenten oder transluzenten Polymeren hergestellt werden. Hierzu eignen sich besonders spritzgussfähige transparente oder transluzente Materialien, die auf folgenden Thermoplasten basieren: aromatischem Polycarbonat (PC), einschließlich Copolycarbonat, Polyestercarbonat, Polystyrol (PS), Styrol-Copolymere, Polyalkylene wie Polyethylen (PE) und Polypropylen (PP), aromatische Polyester wie Polyethylenterephthalat (PET) und Polybutylenterephthalat (PBT), PET-Cyclohexandimethanol-Copolymer (PETG), Polyethylennaphthalat (PEN), Poly- oder Copolymethylmethacrylate wie Polymethylmethacrylat (PMMA), Polyimide (z.B. PMMI), Polyethersulfone, thermoplastische Polyurethane, cyclische Olefinpolymere oder -copolymere (COP bzw. COC) oder Mischungen der genannten Komponenten, sofern diese Mischungen transparent oder transluzent sind.

Häufig werden solche transparenten oder transluzenten Materialien mit zusätzlichen Farbmitteln versetzt, um den Farbeindruck oder die Farbtemperatur des Lichts zu verändern.

Die EP 2799200 A1 beschreibt Stabilisatoren und weitere Additive zur Verbesserung der Lichttransmission. Bestimmte Stabilisatoren wie Phosphor-basierte Antioxidantien und phenolische Radikalfänger werden schon seit längerem eingesetzt, um die optischen Eigenschaften zu verbessern. Die Verbesserung der Transmission ist hier aber sehr begrenzt.

Die US 2017/0218198 A1 beschreibt den Zusatz von Polyoxamethylenpolyoxapropylenglykolen zu Polycarbonat, um die Lichttransmission zu erhöhen. Derartige Glykolether weisen allerdings nur eine begrenzte Temperaturstabilität auf. Bei der Verarbeitung bei hohen Temperaturen, welche für Polycarbonat üblich ist, können Abbauprodukte auftreten, die sich z.B. im Werkzeug ablagern. Diese Ablagerungen führen zu längeren Reinigungszyklen, was unerwünscht ist. Erfindungsgemäße Zusammensetzungen sind daher vorliegend auch bevorzugt frei von Polyoxamethylenpolyoxapropylenglykolen.

Farbkorrigierte Formmassen, die für LED- und Lichtleiter-Anwendungen vorteilhaft sind, sind in EP 2652031 A1 beschrieben. Derartige Farbmittelzusammensetzungen reduzieren allerdings die Transmission im Bereich von 360 bis 460 nm.

Aufgabe der vorliegenden Erfindung war es, thermoplastische Zusammensetzungen für LED-Anwendungen zur Verfügung zu stellen, die über eine hohe Lichttransmission mindestens im Bereich zwischen 360 und 460 nm sowie über eine hohe Thermostabilität, ausgedrückt durch einen geringen ΔY.I.-Wert, Vergleich mit dem entsprechenden Additiv-freien Polycarbonat, verfügen. Die Formmassen sollten sich bevorzugt gut zu den gewünschten Bauteilen verarbeiten lassen, insbesondere auch zu solchen mit komplexerer Geometrie.

Überraschenderweise konnte gezeigt werden, dass der Zusatz von sehr geringen Mengen an aliphatischen Kohlenwasserstoffen in Kombination mit einem Phosphor-basierten Thermostabilisator sowie einem Entformungsmittel auf Basis eines Fettsäureesters die Lichttransmission neben dem Gelbwert (Y.I.) von Polycarbonat verbessert. Dies war überraschend, da der Zusatz von aliphatischen Additiven als Entformungsmittel zu Polycarbonat bekannt ist. Es ist jedoch nicht bekannt, dass sich durch derartige Additive die Transmission für LED-Licht erhöht.

Im Stand der Technik ist der Zusatz dieser speziellen Additive in der WO 2001/004199 A1 beschrieben; jedoch nicht in der erfinderischen Additivkombination. Die Erhöhung der Lichttransmission, insbesondere im Bereich von 360 bis 460 nm, ist nicht beschrieben.

Die Aufgabe der vorliegenden Erfindung wird überraschenderweise durch eine LED-Beleuchtungseinheit, umfassend eine LED-Lichtquelle mit einer Peakwellenlänge im Bereich von 360 bis 460 nm und ein Formteilaus einer transparenten oder transluzenten thermoplastischen Zusammensetzung, enthaltend
a) thermoplastisches Polymer, einschließlich Polymergemisch, bevorzugt umfassend aromatisches Polycarbonat, besonders bevorzugt solches, hergestellt nach dem Grenzflächenverfahren,
b) 10 - 2500 ppm eines oder mehrerer Phosphor-basierter Stabilisatoren, ausgewählt aus der Gruppe, bestehend aus Phosphaten, Phosphiten, Phosphoniten, Phosphinen sowie deren Mischungen,
c) 200 ppm bis 4500 ppm eines oder mehrerer verzweigter aliphatischer Kohlenwasserstoffe,
d) 100 ppm bis 4000 ppm eines oder mehrerer Entformungsmittel auf Basis eines Fettsäureesters,
e) 0 bis 1000 ppm eines oder mehrerer phenolischer Antioxidantien,
f) 0 ppm bis 6000 ppm eines oder mehrerer UV-Absorber und
g) 0 ppm bis 500.000 ppm eines oder mehrerer weiterer Additive,
wobei die Mengenangaben in ppm sich jeweils auf das Gesamtgewicht an thermoplastischem Polymer gemäß Komponente a) beziehen,
gelöst.

Das von der LED-Beleuchtungseinheit ausgesandte Licht weist bevorzugt eine Farbtemperatur, bestimmt nach DIN EN 12665:2009, von 2500 K bis 7000 K, weiter bevorzugt von 2700 K bis 6500 K, noch weiter bevorzugt von 3000 bis 6000 K, auf.

Die Aufgabe wird weiterhin gelöst durch die Verwendung von verzweigten aliphatischen Kohlenwasserstoffen, insbesondere von Squalan, in Kombination mit einem oder mehreren Phosphor-basierten Thermostabilisatoren und einem oder mehreren Entformungsmitteln auf Basis eines Fettsäureesters, zur Erhöhung der Lichttransmission im Bereich von 360 bis 460 nm einer auf einem thermoplastischen Polymer basierenden thermoplastischen Zusammensetzung. "Basierend auf" ist hierbei bevorzugt so zu verstehen, dass das thermoplastische Polymer zu mindestens 50 Gew.-%, weiter bevorzugt zu mindestens 60 Gew.-%, noch weiter bevorzugt zu mindestens 70 Gew.-%, besonders bevorzugt zu mindestens 80 Gew.-%, ganz besonders bevorzugt zu mindestens 90 Gew.-%,äußerst bevorzugt zu mindestens 95 Gew.-%,in der Gesamtzusammensetzung enthalten ist.

Grundsätzlich kann die Zusammensetzung des Formteils weitere Komponenten enthalten, solange sich diese nicht negativ auf die erfindungsgemäßen Zusammensetzungen auswirken.

Bevorzugt enthalten die Zusammensetzungen aber keine weiteren Komponenten neben den Komponenten a) bis d), weiter bevorzugt a) bis g), besonders bevorzugt neben den Komponenten a) bis f).

Im Sinne der Erfindung sind "transparente" Zusammensetzungen solche, die eine Transmission im Bereich von 360 nm bis 780 nm, gemessen bei einer Dicke von 4 mm gemäß ISO 13468-2:2006, von mindestens 85 %, bevorzugt von mindestens 86 %, besonders bevorzugt von mindestens 88 %, und eine Trübung von weniger als 2,0 %, bevorzugt weniger als 1,5 %, weiter bevorzugt weniger als 1,0 %, insbesondere bevorzugt weniger als 0,8 %, bestimmt nach ASTM D1003:2013 bei einer Schichtdicke von 20 mm, aufweisen. Als "transluzent" im Sinne der vorliegenden Erfindung werden Zusammensetzungen bezeichnet, die eine Transmission im Bereich von 360 nm bis 780 nm, gemessen bei einer Dicke von 4 mm gemäß ISO 13468-2:2006, von weniger als 84 % und größer als 20 %, weiter bevorzugt von weniger als 80 % und größer als 50 %, und/oder eine Trübung von mehr als 98%, bestimmt nach ASTM D1003:2013 bei einer Schichtdicke von 20 mm, aufweisen.

Dabei wird "LED-Beleuchtungseinheit" nicht nur im engen Sinne eines Paketes aus mechanisch verbundenen Einzelteilen verstanden, sondern auch breiter als bloße Kombination (lediglich) funktionell zu einer Einheit verbundener Einzelteile. Ebenso kann es sich aber um eine mechanisch verbundene Kombination handeln.

Als "LED-Lichtquelle" wird im Sinne der vorliegenden Erfindung eine Lichtquelle verstanden, die Licht aussendet, das eine Strahlungscharakteristik aufweist, bei der mehr als 70% der im Bereich von 200 nm bis 3000 nm abgegebenen Intensität im sichtbaren Bereich des Spektrums liegt. Im Sinne der vorliegenden Erfindung ist der sichtbare Bereich definiert als der Wellenlängenbereich von 360 nm bis 780 nm. Insbesondere bevorzugt liegen weniger als 5% der Intensität im Bereich < 360 nm. Bei Betrachtung des Bereichs von 360 nm bis 500 nm weist das LED-Licht im Rahmen der vorliegenden Erfindung eine Peakwellenlänge hinsichtlich seiner Intensität - also Wellenlänge der maximalen Intensität- von 360 nm bis 460 nm auf, weiter bevorzugt von 400 nm bis 460 nm, und besonders bevorzugt von 430 nm bis 460 nm, alternativ besonders bevorzugt von 400 nm bis 405 nm, auf. Zur Ermittlung der Peakwellenlänge wird eine strahlungsäquivalente Größe wie z.B. der Strahlungsfluss, spektral aufgelöst gemessen und in einem kartesischen Koordinatensystem dargestellt. Auf der y-Achse wird die strahlungsäquivalente Größe aufgetragen und auf der x-Achse die Wellenlängen. Das absolute Maximum dieser Kurve ist die "Peakwellenlänge" (Definition nach DIN 5031-1 (1982)). "Von...bis"... schließt hierbei die genannten Grenzwerte ein. Dabei hat das "LED-Licht" bevorzugt eine enge Emissionsbreite mit einer Halbwertsbreite von maximal 60 nm, weiter bevorzugt von maximal 45 nm, noch weiter bevorzugt von max. 30 nm, wobei monochromatisches Licht besonders bevorzugt ist. Hierbei ist die Halbwertsbreite die volle Breite eines Emissionspeaks bei des halber Höhe der Intensität.

Solche Emissionscharakteristika werden unter anderem durch die Verwendung von Halbleitern oder Lasern als Lichtquelle erreicht. Die Halbleitertechnologie wird heute bereits häufig eingesetzt, beispielsweise in LEDs (light emitting diodes), organischen LEDs (OLEDs) und elektrolumineszierenden Folien.

"Formteil aus" einer Zusammensetzung ist nicht abschließend so zu sehen, dass hiermit nur einschichtige Elemente gemeint sind. Auch Mehrschichtsysteme kommen in Frage, so lange sie ein Formteil aus einer entsprechenden Zusammensetzung umfassen. Insbesondere können zusätzlich Kratzfestschichten, auf einer oder beiden Seiten des erfindungsgemäß beschriebenen Formteils, vorhanden sein. Der ggf. vorhandene Mehrschichtkörper ist nicht gleichzusetzen mit dem Begriff des "Formteils". Die Erfindung betrifft also auch entsprechende LED-Beleuchtungseinheiten mit einem Mehrschichtkörper, umfassend eine Schicht, bestehend aus der näher definierten Zusammensetzung.

### Komponente a

Das thermoplastische Polymer a) ist bevorzugt aromatisches Polycarbonat (PC), sowohl Homopolycarbonat als auch Copolycarbonat, Polyestercarbonat, Polystyrol (PS), Styrol-Copolymere, ein Polyalkylen wie Polyethylen (PE) und Polypropylen (PP), ein aromatischer Polyester wie Polyethylenterephthalat (PET) und Polybutylenterephthalat (PBT), PET-Cyclohexandimethanol-Copolymer (PETG), Polyethylennaphthalat (PEN), ein Poly- oder Copolymethylmethacrylat wie Polymethylmethacrylat (PMMA), ein Polyimid (z.B. PMMI), ein Polyethersulfon, ein thermoplastisches Polyurethan, ein cyclisches Olefinpolymer oder -copolymer (COP bzw. COC), weiter bevorzugt aromatisches (Homo)Polycarbonat, aromatisches Copolycarbonat, aromatischer Polyester, cyclisches Olefinpolymer oder -copolymer oder Polymethylmethacrylat, oder Mischungen der genannten Komponenten, entweder desselben Typs oder verschiedener Typen, sofern diese Mischungen transparent oder transluzent sind. Besonders bevorzugt ist das thermoplastische Polymer gemäß Komponente a) aromatisches Polycarbonat, wobei es sich auch um Mischungen mehrerer Vertreter dieses Typs, z.B. zwei verschiedene aromatische Copolycarbonate oder zwei verschiedene aromatische Homopolycarbonate, handeln kann. Sofern Komponente a) eine Mischung aus verschiedenen Typen thermoplastischen Polymers ist, handelt es sich bevorzugt um eine Mischung aus Polycarbonat mit PMMA oder Polyester. Äußerst bevorzugt ist als thermoplastisches Polymer aber lediglich aromatisches Polycarbonat enthalten.

Eine Ausführungsform enthält als Komponente a) eine Mischung aus aromatischem Polycarbonat und PMMA mit weniger als 2 Gew.-%, vorzugsweise weniger als 1 Gew.-%, weiter bevorzugt weniger als 0,5 Gew.-%, noch weiter bevorzugt mit 0,15 bis 0,25 Gew.-% und besonders bevorzugt mit 0,08 bis 0,12 Gew.-% PMMA, bezogen auf die Gesamtzusammensetzung, wobei das PMMA bevorzugt ein Molgewicht < 40.000 g/mol, bestimmt mittels Gelpermeationschromatographie unter Verwendung von Polystyrol-Standards und Tetrahydrofuran als Elutionsmittel, Fließrate 1,0 mL/min, aufweist.

Polycarbonate im Sinn der vorliegenden Erfindung sind sowohl Homopolycarbonate als auch Copolycarbonate. Die Polycarbonate können in bekannter Weise linear oder verzweigt sein. Sofern im Rahmen der vorliegenden Erfindung von "Polycarbonaten" gesprochen wird, sind stets aromatische Polycarbonate gemeint, auch, wenn nicht explizit erwähnt.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 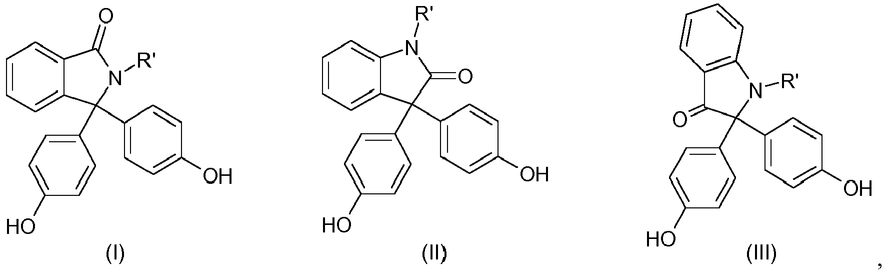 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl] -propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt. Die in den erfindungsgemäßen Zusammensetzungen enthaltenen aromatischen Polycarbonate sind bevorzugt nach dem Grenzflächenverfahren hergestellt.

Bevorzugt werden lineare Polycarbonate eingesetzt.

Die aromatischen Polycarbonate der vorliegenden Erfindung besitzen bevorzugt gewichtsmittlere Molekulargewichte M_{w} zwischen 15.000 und 25.000 g/mol, vorzugsweise zwischen 15.000-24.000 g/mol, weiter bevorzugt zwischen 16.000 - 23.500 g/mol, noch weiter und besonders bevorzugt zwischen 18.000 - 22.500 g/mol. Die Werte gelten für die Ermittlung durch Gelpermeationschromotographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des aromatischen Polycarbonats, gemessen nach ISO 1133:2012-03 bei 300°C und 1,2 kg, beträgt bevorzugt 14 bis 70 cm³/(10 min), weiter bevorzugt 18 bis 65 cm³/(10 min).

Die Mw- und MVR-Angaben beziehen sich a auf die in der Zusammensetzung enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

### Komponente b

U.a. geeignete Phosphor-basierte Stabilisatoren sind Thermostabilisatoren ausgewählt aus der Gruppe der Phosphate, Phosphite, Phosphonite, Phosphine und deren Mischungen. Es können auch Mischungen von verschiedenen Verbindungen aus einer dieser Untergruppen eingesetzt werden, z.B. zwei Phosphite.

Beispiele für geeignete Phosphor-basierte Stabilisatoren sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos® 168), Diisodecylpentaerythritoldiphosphit, Bis(2,4-di-tert-butylphenyl)pentaerythritoldiphosphit, Bis(2,6-di-tert-butyl-4-methylphenyl)pentaerythritol-diphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)-pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, Bis(2,6-di-tert-butyl-4-methylphenyl)pentaerythritoldiphosphit (PEP-36), 5-Butyl-5-ethyl-2-(2,4,6-tri-tert-butylphenoxy)-1,3,2-dioxaphosphiran, Triphenylphosphin (TPP), Trialkylphenylphosphin, Bisdiphenylphosphinoethan oder ein Trinaphthylphosphin. Insbesondere bevorzugt werden Triphenylphosphin (TPP), Irgafos® 168 (Tris(2,4-di-tert-butyl-phenyl)-phosphit), PEP-36 (Bis(2,6-di-tert-butyl-4-methylphenyl)pentaerythritoldiphosphite) oder Tris(nonylphenyl)phosphit oder deren Mischungen eingesetzt. Ganz besonders bevorzugt als Phosphor-haltiger Stabilisator, alleine oder in Mischung, ist Triphenylphosphin.

Phosphatstabilisatoren im Sinne der vorliegenden Erfindung sind beispielsweise Phosphate der Formel (I) 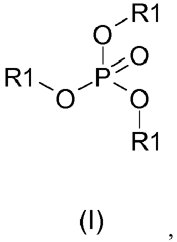 wobei die Reste R1 unabhängig voneinander für verzweigte Alkylreste und/oder optional substituierte Arylreste stehen, wobei der Alkylrest vorzugsweise ein C₁- bis C₁₈-Alkylrest, weiter bevorzugt ein C₁- bis C₈-Alkylrest, ist. Der Arylrest ist vorzugsweise mit linearem C₁- bis C₈-Alkyl, verzweigtem C₁- bis C₈-Alkyl oder Cumyl substituiert, wobei die Substituenten gleich oder verschieden sein können, gleiche Substituenten jedoch bevorzugt sind. Bevorzugt sind die Arylreste in den Positionen 2 und 4 oder 2, 4 und 6 substituiert. Ganz besonders bevorzugt sind tert-Butylsubstituenten in diesen Positionen. Weiter bevorzugt sind alle R1 gleich. Vorzugsweise wird außerdem oder alternativ Triisooctylphosphat als Phosphor-basierter Stabilisator eingesetzt.

Die Gesamtmenge an Phosphor-basierten Stabilisatoren in der Zusammensetzung beträgt 10 - 2500 ppm, vorzugsweise 20 ppm bis 2000 ppm, weiter bevorzugt 100 ppm bis 1500 ppm, besonders bevorzugt 200 ppm bis 1000 ppm, ganz besonders bevorzugt 200 bis 300 ppm, bezogen auf das Gesamtgewicht des thermoplastischen Polymers gemäß Komponente a).

### Komponente c

Bei Komponente c handelt es sich um einen oder mehrere verzweigte aliphatische Kohlenwasserstoffe. Diese sind solche natürlichen oder synthetischen Ursprungs. Vorzugsweise weisen diese Kohlenwasserstoffe seitenständige Alkylgruppen, etwa Methyl-, Ethyl, Propyl-, Isobutyl- oder Butylgruppen, besonders bevorzugt Methylgruppen, auf. Die Zahl der Kohlenstoffatome, die ein erfindungsgemäß eingesetzter Kohlenwasserstoff gemäß Komponente c aufweist, beträgt bevorzugt 20 bis 80, weiter bevorzugt 25 bis 40.

Bei Vorliegen von Methylgruppen als Verzweigungen bilden die Kohlenstoffatome der Methylgruppen einen Gewichtsanteil, bezogen auf das gesamte Molekül, von bevorzugt 10 bis 30 Gew.-%.

Die Kohlenwasserstoffe gemäß Komponente c sind bevorzugt formal oder durch tatsächliche Synthese zu 50 bis 100 Mol% aus hydrierten Mehrfachterpenen, weiter bevorzugt Isopreneinheiten, aufgebaut. Der Anteil der hydrierten Isopropeneinheiten beträgt weiter bevorzugt mehr als 90 Mol%, noch weiter bevorzugt mehr als 95 Mol%, bezogen auf das Gesamtmolekül der Verbindung gemäß Komponente c.

Comonomere, wie sie neben dem Isopren formal vorliegen oder tatsächlich eingesetzt werden können, sind solche, wie sie in der Gummiherstellung und Polyolefinchemie üblich sind, insbesondere 2,3-Dimethylbutadien, Butadien, Propen und/oder Isobuten.

Besonders bevorzugt sind solche gesättigten Aliphaten, wie sie rein rechnerisch, vor Sättigung der verbleibenden Doppelbindungen, aus Isopren über "Kopf-Kopf-" oder "Kopf-Schwanz"- oder "Schwanz-Schwanz"-Verknüpfung entstehen, wobei auch beide Verknüpfungsarten nebeneinander vorkommen können. Ganz besonders bevorzugt ist der Kohlenwasserstoff aus verknüpften Farnesaneinheiten aufgebaut, insbesondere aus "Schwanz-Schwanz"-verknüpften, und ist insbesondere Squalan, hydriertes Lycopin bzw. Octamethyldotriacontan.

Ganz besonders bevorzugt umfasst die Komponente c in den erfindungsgemäß eingesetzten Zusammensetzungen Squalan (2, 6, 10, 15, 19, 23-Hexamethyltetracosan); äußerst bevorzugt ist Komponente c) Squalan.

Die Gesamtmenge an Komponente c beträgt 200 ppm bis 4500 ppm, bevorzugt bis 4000 ppm, weiter bevorzugt bis 3500 ppm, noch weiter bevorzugt 400 ppm bis 3000 ppm, besonders bevorzugt 500 ppm bis 2500 ppm, ganz besonders bevorzugt 1000 ppm bis 2000 ppm, bezogen auf das Gesamtgewicht des thermoplastischen Polymers gemäß Komponente a.

### Komponente d

Komponente d sind Entformungsmittel auf Basis eines Fettsäureesters. Solche Entformungsmittel sind insbesondere Pentaerythrittetrastearat und Glycerinmonostearat. Bevorzugt ist als Entformungsmittel ein Glycerinester von Fettsäure enthalten, weiter bevorzugt ein Glycerinmonoester. Besonders bevorzugt ist als Entformungsmittel Glycerinmonostearat enthalten. Ganz besonders bevorzugt ist neben diesen bevorzugten Vertretern der Komponente d kein weiteres Entformungsmittel auf Basis eines Fettsäureesters in den erfindungsgemäßen Zusammensetzungen enthalten.

"Auf Basis eines Fettsäureesters" ist nicht so streng zu verstehen, dass nur ein einziger Fettsäureester den Verbindungen zugrunde liegt. Wichtig ist lediglich, dass die Entformungsmittel auf Fettsäureestern basieren; hierbei kann es sich auch um Mischungen verschiedener Fettsäureester handeln.

Die Gesamtmenge an Komponente d) beträgt 100 ppm bis 4000 ppm, bevorzugt 120 bis 1000 ppm, weiter bevorzugt 150 ppm bis 800 ppm, noch weiter bevorzugt 150 ppm bis 500 ppm, bezogen auf das Gesamtgewicht an thermoplastischem Polymer gemäß Komponente a.

### Komponente e

Optional können phenolische Antioxidantien in einer Menge bis 1000 ppm, bevorzugt 50 ppm bis 800 ppm, weiter bevorzugt 75 ppm bis 700 ppm, noch weiter bevorzugt100 ppm bis 500 ppm, beispielsweise alkylierte Monophenole, alkylierte Thioalkylphenole, Hydrochinone und alkylierte Hydrochinone, eingesetzt werden. Vorzugsweise werden Irganox® 1010 (Pentaerythrit-3-(4-hydroxy-3,5-di-tert-butylphenyl)propionat; CAS-Nr.: 6683-19-8) und/oder Irganox 1076® (2,6-Di-tert-butyl-4-(octadecanoxycarbonylethyl)phenol; CAS-Nr.: 2082-79-3) eingesetzt. Besonders bevorzugt wird Irganox 1076® (2,6-Di-tert-butyl-4-(octadecanoxycarbonylethyl)phenol) eingesetzt.

In einer speziellen Ausführungsform der vorliegenden Erfindung wird eine Phosphinverbindung gemäß Komponente b gemeinsam mit einem Phosphit gemäß Komponente b oder einem phenolischen Antioxidans gemäß Komponenten e oder einer Mischung aus den beiden letztgenannten Verbindungen eingesetzt.

In einer besonders bevorzugten Ausführungsform besteht das Stabilisatorsystem aus den Komponenten b und e aus Triphenylphosphin, einem Gemisch von Triphenylphosphin und einem phenolischem Antioxidans wie Irganox® 1076 oder Irganox® 1010 und/oder einer Kombination von phenolischem Antioxidans und Phosphit, bevorzugt einem Gemisch aus Irganox® 1076 bzw. Irganox® 1010 und Irgafos® 168 bzw. PEP-36. In einer weiteren besonders bevorzugten Ausführungsform besteht das Stabilisatorsystem aus einem Phosphin, einem Phosphit und einem phenolischen Antioxidans, beispielsweise Triphenylphosphin, Irganox® 1076 und Irgafos® 168.

### Komponente f

Die UV-Absorber als Komponente f der vorliegenden Erfindung sind Verbindungen, die eine möglichst geringe Transmission unterhalb von 400 nm und eine möglichst hohe Transmission oberhalb von 400 nm besitzen. Derartige Verbindungen und deren Herstellung sind literaturbekannt und sind beispielsweise in den EP 0 839 623 A1, WO 1996/15102 A2 und EP 0 500 496 A1 beschrieben. Für den Einsatz in der erfindungsgemäßen Zusammensetzung bevorzugte Ultraviolett-Absorber sind Benzotriazole, insbesondere Hydroxy-Benzotriazole, Triazine, Benzophenone und/oder arylierte Cyanoacrylate.

Folgende Ultraviolett-Absorber sind besonders geeignet: Hydroxy-Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen),) Bis-(3-(2H-benztriazolyl)-2-hydroxy-5-tert.-octyl)methan, (Tinuvin® 360, BASF SE, Ludwigshafen), (2-(4,6-Diphenyl-1,3,5-triazin-2-yl)-5-(hexyloxy)-phenol (Tinuvin® 1577, BASF SE, Ludwigshafen), die Benzophenone 2,4-Dihydroxy-benzophenon (Chimasorb® 22, BASF SE, Ludwigshafen) oder 2-Hydroxy-4-(octyloxy)-benzophenon (Chimassorb® 81, BASF SE, Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul® 3030, BASF SE, Ludwigshafen), 2-[2-Hydroxy-4-(2-ethylhexyl)oxy]phenyl-4,6-di(4-phenyl)phenyl-1,3,5-triazin (CGX UVA 006, BASF SE, Ludwigshafen) oder Tetraethyl-2,2'-(1,4-phenylen-dimethyliden)-bismalonat (Hostavin® B-Cap, Clariant AG). Es können auch Mischungen dieser Ultraviolett-Absorber eingesetzt werden.

Ganz besonders bevorzugte UV-Absorber sind Tinuvin® 360, Tinuvin® 329, Hostavin® B-Cap, Uvinul® 3030, besonders bevorzugt Tinuvin® 329 und Hostavin® B-Cap.

Die Gesamtmenge an UV-Absorbern beträgt 0 ppm bis 6000 ppm, bevorzugt 500 ppm bis 5000 ppm, weiter bevorzugt 1000 ppm bis 2000 ppm, bezogen auf das Gesamtgewicht an thermoplastischem Polymer.

### Komponente g

Die erfindungsgemäßen Polymer-Zusammensetzungen können neben den genannten Stabilisatoren optional noch weitere übliche Polymeradditive als Komponente g enthalten, wie sie z.B. in EP 0 839 623 A1, WO 1996/15102 A2, EP 0 500 496 A1 oder im "Plastics Additives Handbook", Hans Zweifel, 5th Edition 2000, Hanser Verlag, München, beschrieben sind. Weitere übliche Additive sind von Komponente e verschiedene Antioxidantien, von Komponente d verschiedene Entformungsmittel, Flammschutzmittel, Antitropfmittel, von Komponente b verschiedenen Stabilisatoren, optische Aufheller, Lichtstreumittel, Farbmittel, jeweils in den für die jeweiligen Thermoplasten üblichen Mengen. Es versteht sich, dass Komponente g nur solche Komponenten umfasst, die nicht schon bereits durch die Additive b bis f beschrieben sind.

Bevorzugt werden die weiteren Polymeradditive g in einer Gesamtmenge von 0 ppm bis 500.000 ppm, bevorzugt 100 ppm bis 100.000 ppm, und weiter bevorzugt 500 ppm bis 50.000 ppm, besonders bevorzugt bis 30.000 ppm, jeweils bezogen auf die Menge an thermoplastischem Polymer gemäß Komponente a, eingesetzt. Auch Mischungen mehrerer Additive sind geeignet.

Sollten Farbmittel in der erfindungsgemäßen Zusammensetzung eingesetzt werden, ist es hierbei essentiell, dass die zugesetzten Farbmittel den Bedingungen während des Betriebs der Lichtquelle gegenüber beständig sind, z.B. eine hohe Beständigkeit gegenüber dem eingestrahlten Licht, gegebenenfalls erhöhter Temperatur und anderen bei Betrieb der Lichtquelle herrschenden Bedingungen aufweisen, und dass die Farbmittel im Substratmaterial im Bereich des Emisionsmaximums der Lichtquelle, d.h. insbesondere im Bereich von 360 nm bis 460 nm, oder im Konversionsbereich, keine relevante Absorption aufweisen, da diese die Effizienz des Beleuchtungsmittels und somit die Lichtstärke erheblich beeinträchtigt. Bevorzugt eingesetzte Farbmittel sind Macrolex® Blau RR, Macrolex® Violett 3 R und/oder Macrolex® Rot EG.

Weitere Additive sind auch Tetramethylenglycolderivate.

Eine erfindungsgemäß bevorzugte LED-Beleuchtungseinheit, umfassend eine LED-Lichtquelle mit einer Peakwellenlänge im Bereich von 360 bis 460 nm und ein Formteil aus einer transparenten oder transluzenten, bevorzugt transparenten, thermoplastischen Zusammensetzung ist eine solche, bei der die Zusammensetzung
a) thermoplastisches Polymer, wobei als thermoplastisches Polymer aromatisches Polycarbonat enthalten ist,
b) 10 - 2500 ppm eines oder mehrerer Phosphor-basierter Stabilisatoren, ausgewählt aus der Gruppe, bestehend aus Phosphaten, Phosphiten, Phosphoniten, Phosphinen sowie deren Mischungen,
c) 200 ppm bis 4500 ppm eines oder mehrerer verzweigter aliphatischer Kohlenwasserstoffe,
d) 100 ppm bis 4000 ppm eines oder mehrerer Entformungsmittel auf Basis eines Fettsäureesters,
e) 0 bis 1000 ppm eines oder mehrerer phenolischer Antioxidantien,
f) 0 ppm bis 6000 ppm eines oder mehrerer UV-Absorber und
g) 0 ppm bis 500.000 ppm eines oder mehrerer weiterer Additive,
wobei die Mengenangaben in ppm sich jeweils auf das Gesamtgewichts an thermoplastischem Polymer beziehen,
enthält.

Weiter bevorzugt ist eine LED-Beleuchtungseinheit, umfassend eine LED-Lichtquelle mit einer Peakwellenlänge im Bereich von 360 bis 460 nm und ein Formteil aus einer transparenten oder transluzenten, bevorzugt transparenten, thermoplastischen Zusammensetzung, enthaltend
a) thermoplastisches Polymer, wobei als thermoplastisches Polymer aromatisches Polycarbonat enthalten ist,
b) 10 - 2500 ppm eines oder mehrerer Phosphor-basierter Stabilisatoren, ausgewählt aus der Gruppe, bestehend aus Phosphaten, Phosphiten, Phosphoniten, Phosphinen sowie deren Mischungen,
c) 200 ppm bis 4500 ppm eines oder mehrerer verzweigter aliphatischer Kohlenwasserstoffe, wobei als verzweigter aliphatischer Kohlenwasserstoff Squalan enthalten ist,
d) 100 ppm bis 4000 ppm eines oder mehrerer Entformungsmittel auf Basis eines Fettsäureesters,
e) 0 ppm bis 1000 ppm eines oder mehrerer phenolischer Antioxidantien,
f) 0 ppm bis 6000 ppm eines oder mehrerer UV-Absorber und
g) 0 ppm bis 50.000 ppm eines oder mehrerer weiterer Additive,
wobei die Mengenangaben in ppm sich jeweils auf das Gesamtgewichts an thermoplastischem Polymer gemäß Komponente a beziehen.

Besonders bevorzugt ist eine LED-Beleuchtungseinheit, umfassend eine LED-Lichtquelle mit einer Peakwellenlänge im Bereich von 360 bis 460 nm und ein Formteil aus einer transparenten oder transluzenten, bevorzugt transparenten, thermoplastischen Zusammensetzung, bestehend aus
a) aromatischem Polycarbonat,
b) 10 - 2500 ppm eines oder mehrerer Phosphor-basierter Stabilisatoren, ausgewählt aus der Gruppe, bestehend aus Phosphaten, Phosphiten, Phosphoniten, Phosphinen sowie deren Mischungen, wobei Komponente b bevorzugt Triphenylphosphin umfasst,
c) 200 ppm bis 4500 ppm eines oder mehrerer verzweigter aliphatischer Kohlenwasserstoffe, wobei als verzweigter aliphatischer Kohlenwasserstoff Squalan enthalten ist,
d) 100 ppm bis 4000 ppm eines oder mehrerer Entformungsmittel auf Basis eines Fettsäureesters, wobei Komponente d bevorzugt Glycerinmonostearat umfasst,
e) 0 ppm bis 1000 ppm eines oder mehrerer phenolischer Antioxidantien,
f) 0 ppm bis 6000 ppm eines oder mehrerer UV-Absorber, und
g) 0 ppm bis 50.000 ppm eines oder mehrerer weiterer Additive, ausgewählt aus der Gruppe, bestehend aus von Komponente e verschiedenen Antioxidantien, Flammschutzmitteln, Antitropfmittel, von Komponente b verschiedenen Stabilisatoren, von Komponente d verschiedene Entformungsmitteln, optischen Aufhellern, Lichtstreumitteln, Farbmitteln,
wobei die Mengenangaben in ppm sich jeweils auf das Gesamtgewichts an aromatischem Polycarbonat gemäß Komponente a beziehen.

Ganz besonders bevorzugt ist das Formteil eine Linse, eine Lampenabdeckung und/oder ein Lichtleiter.

Um eine ausreichende Fließfähigkeit der thermoplastischen Zusammensetzung und damit eine ausreichend gute Verarbeitbarkeit zu gewährleisten, sollte der MVR-Wert der Zusammensetzung (gemessen nach ISO 1133:2012-03 bei 300°C und 1,2 kg) bevorzugt zwischen 18 cm³/(10 min) und 80 cm³/(10 min), weiter bevorzugt zwischen 20 cm³/(10 min) und 80 cm³/(10 min), noch weiter bevorzugt zwischen 30 cm³/(10 min) und 80 cm³/(10 min) und besonders bevorzugt zwischen 32 cm³/(10 min) und 75 cm³/(10 min) liegen.

Für eine gute mechanische Stabilität von beispielsweise Lampenabdeckungen oder Teilen in Automobilscheinwerfern sollte die Kerbschlagzähigkeit der thermoplastischen Formmassen, gemessen nach ISO 179/1eA:2010 bei Raumtemperatur an 3 mm dicken Probekörpern, bevorzugt mindestens 40 kJ/m² betragen, weiter bevorzugt zwischen 50 kJ/m² und 130 kJ/m², noch weiter bevorzugt zwischen 55 kJ/m² und 120 kJ/m² und besonders bevorzugt zwischen 55 kJ/m² und 80 kJ/m².

Das Material sollte bevorzugt eine erhöhte Wärmeformbeständigkeit aufweisen, um den erhöhten Temperaturen während des Betriebs der Beleuchtungseinheit standzuhalten und dabei die präzise Formgebung nicht zu verlieren. Die Vicat-Erweichungstemperatur, gemessen nach DIN EN ISO 306:2014 (50N, 120°C/h), beträgt daher bevorzugt mindestens 120 °C. Weiter bevorzugt liegt die Vicat-Erweichungstemperatur zwischen 120°C und 220°C, noch weiter bevorzugt zwischen 130°C und 200°C, besonders bevorzugt zwischen 140°C und 180°C, ganz besonders bevorzugt zwischen 140°C und 150°C.

Der Brechungsindex des Materials, gemessen nach DIN EN ISO 489:1999, Methode A, beträgt bevorzugt mindestens 1,400. Weiter bevorzugt liegt der Brechungsindex zwischen 1,450 und 1,600, noch weiter bevorzugt zwischen 1,480 und 1,590, besonders bevorzugt zwischen 1,500 und 1,590, ganz besonders bevorzugt zwischen 1,550 und 1,590.

Methoden zur Herstellung der erfindungsgemäß in den LED-Beleuchtungseinheiten verwendeten Polymer-Zusammensetzungen sind dem Fachmann grundsätzlich bekannt.

Die Herstellung der erfindungsgemäß eingesetzten Polymer-Zusammensetzungen, enthaltend die Komponenten a bis d und ggf. e, ggf. f und ggf. g, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen aus Granulaten oder Granulaten und Pulvern mit den erfindungsgemäßen Zusätzen verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Additive der erfindungsgemäß verwendeten Zusammensetzungen durch bekannte Verfahren oder als Masterbatch eingebracht werden. Die Verwendung von Masterbatchen ist insbesondere zum Einbringen von ggf. enthaltenen Farbmitteln bevorzugt, wobei insbesondere Masterbatche auf Basis der jeweiligen Polymermatrix verwendet werden.

Die Zusammensetzung kann in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Zur Herstellung der Formkörper wird bevorzugt das Spritzgussverfahren eingesetzt. Dieses hat den Vorteil eines hohen Freiheitsgrades in der Formgebung.

Erfindungsgemäß eingesetzte Formteile aus den beschriebenen Zusammensetzungen, haben bevorzugt die Funktion von Abdeckungen, insbesondere Lampenabdeckungen, Lichtleitern und/oder Linsen für LED-Leuchten in Kraftfahrzeugen oder anderen Beleuchtungsanwendungen und sind bestimmt für die Verwendung in Kombination mit LED-Licht, insbesondere von LED-Lichtquellen mit einer Peakwellenlänge im Bereich von 360 bis 460 nm, und besonders vorteilhaft, sofern sie Licht von Hochleistungs-LEDs ausgesetzt sind.

### Mögliche Formteile sind

1. Linsen zum Fokussieren und bestimmungsgemäßen Verteilen des Lichtes, sowie Lichtleiter, insbesondere solche in Automobilscheinwerfern mit LED-Lichtquelle, die als Tagfahrlicht zum Einsatz kommen,
2. Lichtleiter, insbesondere solche in Automobilscheinwerfern mit LED-Lichtquelle, die als Tagfahrlicht zum Einsatz kommen,
3. Leuchten, z.B. Scheinwerferabdeckungen, Blinkerkappen oder andere optische Elemente im Scheinwerfer,
4. Leuchten für den Innenbereich von Wohn- und Bürogebäuden und Leuchten für den Außenbereich wie z.B. Straßenlaternen,
5. Beleuchtungsvorrichtungen in Flachbildfernsehern,
6. Beleuchtungsvorrichtungen von Displays elektronischer Geräte wie z.B. Taschenrechner, Mobiltelefone,
7. Automobilteile, wie Verglasungen, Karosserieteile und Zierteile mit LED-Beleuchtung.

Von Interesse ist auch der Einsatz der Formteile als Mehrschichtsysteme. Hierbei wird die erfindungsgemäße Kunststoffzusammensetzung in einer oder mehreren Schicht(en) auf einen geformten Gegenstand aus einem Kunststoff, welcher nicht gefärbt oder anders gefärbt ist, aufgebracht bzw. eine oder mehrere Schicht(en) werden auf ein Element/eine Schicht, bestehend aus der Kunststoffzusammensetzung, aufgebracht. Das Aufbringen kann zugleich mit oder unmittelbar nach der Formgebung des Formteils geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen oder durch Beschichtung aus einer Lösung. In einem Mehrschichtsystem bildet das Formteil bevorzugt die Trägerschicht, d.h. die dickste Schicht.

Das Formteil kann - falls gewünscht - eine geringe Dicke aufweisen, was für flächige Applikationen vorteilhaft ist. Die Dicke kann beispielsweise im Bereich von 0,5 bis 1,5 mm liegen. Es sind aber auch Dickwandausführungen möglich, z.B. bei Dickwandoptiken mit einer Dicke von 2 bis 3 cm. Die Möglichkeit, elektronische Komponenten, insbesondere die LED-Lichtquelle, direkt in Vertiefungen des Formteiles einzusetzen, hat verschiedene Vorteile. So lässt sich insbesondere die elektronische Komponente präzise auf dem Kunststoffformteil positionieren.

Eine Vertiefung im optischen Bauteil, umfassend das Formteil, kann derart ausgestaltet sein, dass die Oberseite der einen oder mehreren elektronischen Komponente(n) annähernd bündig mit der Formteiloberseite abschließt. Diese Anordnung hat den Vorteil, dass die Herstellung eines elektrischen Kontakts der elektronischen Komponente(n) mit weiteren Komponenten und/oder elektrischen Leitern auf vorteilhafte Art und Weise erfolgen kann.

Zusätzlich kann das transparente oder transluzente Kunststoffformteil an seiner Oberfläche Strukturen mit optischem Effekt zur zusätzlichen Steuerung des Lichtes, beispielsweise Mikrolinsen, aufweisen.

Alternativ zu dem vorgenannten Kunststoffformkörper mit Mikrolinsen zur Fokussierung und Effizienzsteigerung kann ein Kunststoffformteil, auch eine Kunststofffolie, mit Diffusoreigenschaften ausgestattet werden, so dass der Eindruck einer "Flächenleuchte" anstelle einer Leuchte mit punktuellen Lichtquellen entsteht.

Werden in diesen Kunststoffformkörper oder diese Kunststofffolie phosphoreszierende Pigmente, sogenannte Phosphore, eingearbeitet oder aufgetragen, so kann beispielsweise weißes Licht erzeugt werden, wenn blaue LEDs eingesetzt wurden. Durch den Einsatz der Phosphore können so verschiedene Effekte erzielt werden.

### Beispiele

### Materialien:

**PC1:** Aromatisches Polycarbonat der Firma Covestro Deutschland AG mit einer MVR von ca. 33 cm³/(10 min), gemessen bei 300 °C und 1,2 kg Belastung (gemäß ISO 1133-1:2012-03), basierend auf Bisphenol A und terminiert mit tert.-Butylphenol. Hergestellt im Grenzflächenverfahren. Das Polycarbonat enthält 250 ppm Triphenylphosphin und 300 ppm Glycerinmonostearat (bezogen auf die Menge Polycarbonat in der Gesamtzusammensetzung des jeweiligen Beispiels). Verwendet für Beispiele V1 bis V12 und E13 bis E16.
**PC2:** Aromatisches Polycarbonat der Firma Covestro Deutschland AG mit einer MVR von ca. 34 cm³/(10 min), gemessen bei 300 °C und 1,2 kg Belastung (gemäß ISO 1133-1:2012-03), basierend auf Bisphenol A und terminiert mit tert.-Butylphenol.- Das Polycarbonat enthält 250 ppm Triphenylphosphin und 300 ppm Glycerinmonostearat (bezogen auf die Menge Polycarbonat in der Gesamtzusammensetzung des jeweiligen Beispiels). Hergestellt im Grenzflächenverfahren. Verwendet für die Vergleichsbeispiele V17 und V18.
**PC3:** Aromatisches Polycarbonat der Firma Covestro Deutschland AG mit einer MVR von ca. 55 cm³/(10 min), gemessen bei 300 °C und 1,2 kg Belastung (gemäß ISO 1133-1:2012-03), basierend auf Bisphenol A und terminiert mit tert.-Butylphenol. Hergestellt im Grenzflächenverfahren. Das Polycarbonat enthält 250 ppm Glycerinmonostearat (bezogen auf die Menge Polycarbonat in der Gesamtzusammensetzung des jeweiligen Beispiels).
**A1:** Metablen TP-003 der Firma Mitsubishi Chemical Europe GmbH. Fließhilfsmittel für Polycarbonat auf Basis eines Phenyl-substiuierten Methacrylat-Styrol-Acrylnitril-Copolymers.
**A2:** Disflamoll® TP der Lanxess Deutschland GmbH. Triphenylphosphat; CAS-Nr. 115-86-6.
**A3:** Zeonor® 1420R der Firma Zeon Corp., Chiyoda, Japan. Cylcoolefincopolymer (COP).
**A4:** Dianal BR87 der Firma Mitsubishi Rayon. Polymethylmethacrylat mit einem Molekulargewicht von ca. 25.000 g/mol, bestimmt unter Verwendung eines Ostwald-Viskosimeters durch Messung der intrinsischen Viskosität in Chloroform bei 25°C, und einem Brechungsindex von 1,490.
**A5:** Squalan der Merck KGaA, Darmstadt, Deutschland. 2,6,10,15,19,23-Hexamethyltetracosan; CAS-Nr. 111-01-3.
**A6:** Dimodan® HAB Veg der Firma DuPont. Ein Glycerinmonostearat.
**A7:** Triphenylphosphin der Firma BASF SE; CAS-Nr. 603-35-0.

### Durchführung:

### Versuche zur Herstellung der Musterplatten für optische Messung (40 mm x 38 mm x 20 mm), VI bis V12, E13-E16

Der Polycarbonatrohstoff PC1 wurde für 3 Stunden in einem Trockenlufttrockner bei 120 °C getrocknet. Es wurden 10 kg des so getrockneten Materials in ein 25 1 Gefäß gefüllt und dann das schon bereits abgewogene Additiv zugeführt und für 10 min in einem Taumelmischer gemischt. Der Schritt des Mischens entfiel für V1.

Bei der nachfolgenden Spritzgießverarbeitung wurde das Gemisch über den Materialeinfülltrichter einer Krauss Maffei 80-38 Spritzgussmaschine zugeführt und dann bei 260 °C Massetemperatur in einem Multilayerverfahren verspritzt. Es wurden optische Musterplatten mit einer Abmessung von 40 mm x 38 mm x 20 mm verspritzt.

### Zykluszeiten:

Vorspritzling 213 s; Nachspritzling 147 s; Gesamt-Zykluszeit: 360 s.

### Versuche zur Herstellung der Musterplatten für optische Messungen (40 mm x 38 mm x 20 mm) V17 und V18:

Der Polycarbonatrohstoff PC2 wurde für 3 Stunden in einem Trockenlufttrockner bei 120 °C getrocknet. Es wurden 10 kg des so getrockneten Materials in ein 25 1 Gefäß gefüllt und dann das schon bereits abgewogene Additiv zugeführt und für 10 min in einem Taumelmischer gemischt. Der Schritt des Mischens entfiel für V18.

Bei der nachfolgenden Spritzgießverarbeitung wurde das Gemisch über den Materialeinfülltrichter einer Krauss Maffei 80-38 Spritzgussmaschine zugeführt und dann bei 260 °C Massetemperatur in einem Multilayerverfahren verspritzt. Es wurden optische Musterplatten mit einer Abmessung von 40 mm x 38 mm x 20 mm verspritzt.

### Zykluszeiten:

Vorspritzling 213 s; Nachspritzling 147 s; Gesamt-Zykluszeit: 360 s.

### Herstellung der Compounds 19V und E20

Die Compoundierung erfolgte auf einem Berstorff Doppelschneckenextruder bei einer Massetemperatur von 275°C und einer Extruderdrehzahl von 100 Umdrehungen / Minute.

Das PC3-Granulat wurde bei 110 °C für 3 Stunden im Vakuum getrocknet und dann mit den Additiven compoundiert. Zur Dispergierung der Additive wurde eine Pulvervormischung verwendet. Dazu wurden die Additive in einem Polycarbonatpulver (Aromatisches Polycarbonat der Firma Covestro Deutschland AG mit einer MVR von ca. 19 cm³/(10 min), gemessen bei 300 °C und 1,2 kg Belastung (gemäß ISO 1133-1:2012-03), basierend auf Bisphenol A und terminiert mit tert.-Butylphenol, vordispergiert. Dieses Pulver wurde in einer Menge von 5 Gew.-% zudosiert. Die Additive wurden derart dosiert, dass sich die unten angegebenen Mengen ergaben.

Additivmengen (bezogen auf die Menge Polycarbonat in der Gesamtzusammensetzung des jeweiligen Beispiels):
V19: 2000 ppm Squalan
E20: 250 ppm Triphenylphosphin (A7) und 2000 ppm Squalan

### Herstellung der Prüfkörper (60 mm x 40 mm x 4 mm) für V19, E20

Das compoundierte Granulat wurde bei 120 °C für 3 Stunden im Vakuum getrocknet und anschließend auf einer Spritzgussmaschine vom Typ Arburg 370 mit einer Spritzeinheit bei einer Massetemperatur von 280 °C und einer Werkzeugtemperatur von 80 °C zu Farbmusterplatten mit den Abmessungen 60 mm x 40 mm x 4 mm (Breite x Höhe x Dicke) verarbeitet.

### Herstellung der Compounds V21, E22 bis E24

Die Compoundierung erfolgte auf einem Berstorff Doppelschneckenextruder bei einer Massetemperatur von 275°C und einer Extruderdrehzahl von 100 Umdrehungen / Minute.

Das PC1-Granulat wurde bei 110 °C für 3 Stunden im Vakuum getrocknet und dann mit den Additiven compoundiert. Zur Dispergierung der Additive wurde eine Pulvervormischung verwendet. Dazu wurden die Additive in einem Polycarbonatpulver (aromatisches Polycarbonat der Firma Covestro Deutschland AG mit einer MVR von ca. 19 cm³/(10 min), gemessen bei 300 °C und 1,2 kg Belastung (gemäß ISO 1133-1:2012-03), basierend auf Bisphenol A und terminiert mit tert.-Butylphenol) vordispergiert. Dieses Pulver wurde in einer Menge von 5 Gew.-% zudosiert. Die Additive wurden derart dosiert, dass sich die unten angegebenen Mengen ergaben.

Additivmengen (bezogen auf die Menge Polycarbonat in der Gesamtzusammensetzung des jeweiligen Beispiels):
V21: --
E22: 1000 ppm Squalan
E23: 2000 ppm Squalan
E24: 3000 ppm Squalan

### Bestimmungsmethoden:

### Optische Messung der Farbmusterplättchen mit einer Dicke von 4 mm und der Quader mit einer Dicke von 20 mm:

Die optische Messung erfolgte an einem Lambda 950 Spektralphotometer der Firma Perkin Elmer mit Photometerkugel.

Die Methoden zur Bestimmung der Lichttransmission, des Yellowness-Index und des Haze waren die gleichen für die 40 x 38 x 20 mm Quader und für die 60 x 40 x 4 mm Farbmusterplättchen:
Die Transmissionsmessungen - **Lichttransmission (Ty, T)-,** auch bei 380 nm und 360 bis 460 nm, wurden an einem Lambda 950 Spektralphotometer der Firma Perkin Elmer mit Photometerkugel nach ISO 13468-2:2006 durchgeführt (d.h. Bestimmung der Gesamttransmission durch Messung der diffusen Transmission und direkten Transmission). Die Auswertung erfolgte durch Betrachtung in 5 nm-Schritten.

Der **Yellowness-Index** (Y.I.) wurde gemäß ASTM E 313-15 (Beobachter: 10° / Lichtart: D65) mit einem Lambda 950 Spektralphotometer der Firma Perkin Elmer mit Photometerkugel bestimmt.

Der **Haze** (Trübung) wurde bestimmt gemäß ASTM D1003:2013.

Die **Glasübergangstemperatur T_{g}** wurde mittels DSC im Wärmestromdifferenzkalorimeter (Mettler DSC 3 +) bei einer Aufheizrate von 10 K/min (Atmosphäre: 50 ml/min Stickstoff) in Standardtiegeln über einen Temperaturbereich von 0 °C - 280 °C gemessen. Es wurde der im 2. Aufheizvorgang ermittelte Wert angegeben. Die Messung erfolgte nach ISO 11357-2:2014-07

**Tabelle 1a: Verarbeitungsversuche mit PC1 bei 260 °C, 20 mm Quader.**

| **Bsp.** | **Additiv** | **Additiv-Konzentration A1-A6 (Gew.-%)*** | **Ty (%)** | **ΔTy (%)** | **ΔT bei 380 nm (%)** | **ΔT bei 360-460 nm (%)** | **ΔYI** | **YI** | **ΔHaze (%)** |
|---|---|---|---|---|---|---|---|---|---|
| **1V** | - | - | 88,87 | | | | | 3,13 | |
| **2V** | A1 | 0,1 | 88,49 | -0,38 | -1,93 | -26,29 | 0,26 | 3,39 | -0,02 |
| **3V** | A1 | 0,2 | 88,71 | -0,16 | -0,75 | -10,06 | 0,03 | 3,16 | 0,02 |
| **4V** | A1 | 0,3 | 88,77 | -0,10 | -0,90 | -10,80 | 0,05 | 3,18 | -0,11 |
| **5V** | A1 | 0,4 | 88,69 | -0,18 | -2,36 | -31,45 | 0,57 | 3,70 | 0,08 |
| **6V** | A2 | 0,1 | 88,57 | -0,30 | -2,49 | -28,68 | 0,15 | 3,28 | -0,06 |
| **7V** | A2 | 0,2 | 88,63 | -0,24 | -2,33 | -24,18 | -0,06 | 3,07 | -0,05 |
| **8V** | A2 | 0,3 | 88,75 | -0,12 | -1,94 | -17,76 | -0,18 | 2,95 | -0,20 |
| **9V** | A2 | 0,4 | 88,84 | -0,03 | -1,74 | -14,48 | -0,18 | 2,95 | -0,40 |
| **10V** | A3 | 0,2 | 78,22 | -10,65 | -22,03 | -406,73 | 10,39 | 13,52 | 56,38 |
| **11V** | A4 | 0,1 | 88,46 | 0,12* | -2,27* | -28* | 0,49 | 4,13 | -0,04 |
| **12V** | A4 | 0,2 | 88,62 | 0,28* | -3,14* | -31* | -0,01 | 3,63 | 0,09 |
| **13E** | A5 | 0,1 | 88,89 | 0,02 | 1,84 | 22,19 | -0,09 | 3,04 | -0,39 |
| **14E** | A5 | 0,2 | 88,91 | 0,03 | 2,23 | 27,57 | -0,16 | 2,97 | -0,46 |
| **15E** | A5 | 0,3 | 88,85 | -0,02 | 2,13 | 24,95 | -0,05 | 3,08 | -0,46 |
| **16E** | A5 | 0,4 | 88,88 | 0,00 | 2,39 | 28,72 | -0,12 | 3,01 | -0,37 |

| | | | | | | | | | |
|---|---|---|---|---|---|---|---|---|---|
| * bezogen auf die Gesamtzusammensetzung | | | | | | | | | |

**Tabelle 1b: Verarbeitungsversuche mit PC2 bei 260 °C, 20 mm Quader.**

| **Bsp.** | **Additiv** | **Additiv-Konzentration A1-A6 (Gew.-%)*** | **Ty (%)** | **ΔTy (%)** | **ΔT bei 380 nm (%)** | **ΔT bei 360-460 nm (%)** | **ΔYI** | **YI** | **ΔHaze (%)** |
|---|---|---|---|---|---|---|---|---|---|
| **18V** | - | - | 88,34 | | | | | 3,64 | |
| **17V** | A6 | 0,08 | 87,48* | -0,86* | -7,47* | -98 | 1,02 | 4,67 | 0,31 |

| | | | | | | | | | |
|---|---|---|---|---|---|---|---|---|---|
| * bezogen auf die Gesamtzusammensetzung | | | | | | | | | |

**Tabelle 2: Verarbeitungsversuche mit PC2 bei 260 °C, 4 mm Farbmusterplättchen.**

| **Bsp.** | **Ty (%)** | **ΔTy (%)** | **ΔT bei 380 nm (%)** | **ΔT bei 360-460 nm (%)** | **ΔYI** | **YI** | **ΔHaze (%)** |
|---|---|---|---|---|---|---|---|
| **19V** | 89,51 | | | | | 2,10 | |
| **E20** | 89,77 | 0,26 | 6,67 | 40,7 | -0,97 | 1,13 | -0,07 |

Die Δ-Werte beziehen sich jeweils auf den entsprechenden Wert des Referenzbeispiels 1V; bei 10V, 11V und 17V beziehen sich die Δ-Werte jeweils auf den entsprechenden Wert des Referenzbeispiels 18V.

**Tabelle 3: T_{g}-Werte.**

| **Bsp.** | **T_{g} [°C]** |
|---|---|
| **V21** | 145,2 |
| **E22** | 145,0 |
| **E23** | 144,0 |
| **E24** | 143,3 |

Die Beispiele zeigen, dass sich durch Zugabe der Additive die Gesamttransmission Ty in den meisten Fällen deutlich verringert (Δ**Ty** negativ). Nur bei dem Zusatz von PMMA (A4), wie auch in DE 60116498 T2 beschrieben, wird die Transmission leicht erhöht. Allerdings ist die Transmission im Bereich von 360 - 460 nm verringert. Dies ist insbesondere für LED-Anwendungen nachteilhaft, da die in den beschriebenen Anwendungen meistens verwendeten LEDs gerade in diesem Spektralbereich die meiste Energie liefern. Eine größere Absorption in diesem Bereich führt zu einer schlechteren Langzeitperformance.

Das Additiv A1 ist als Fließhilfsmittel bekannt. Durch eine verbesserte Fließfähigkeit ist es prinzipiell möglich, die Schädigung während der thermischen Verarbeitung in Extrudern oder Spritzgussmaschinen herabzusetzen, da weniger Scherkräfte eingetragen werden. Somit war es überraschend, dass mittels dieses Additivs keine Verbesserung hinsichtlich Transmission und Gelbwert erzielt werden konnte.

Niedermolekulare Additive wie A3 können ebenfalls die Fließfähigkeit erhöhen - allerdings, ohne einen positiven Effekt auf die optischen Eigenschaften im relevanten Transmissionsbereich zu erreichen.

Das Additiv A5 hat wie Additiv A6 eine entformende Wirkung. Allerdings bleibt ein weiterer Zusatz von A6 als Entformer ohne signifikanten Effekt bzw. führt zu deutlich verminderter Transmission bei 380 nm, wohingegen überraschenderweise der Einsatz von A5 schon in geringen Mengen zu einer Verbesserung der optischen Eigenschaften, insbesondere im relevanten Transmissionsbereich führt.

Nur bei den erfindungsgemäßen Beispielen steigen die Gesamttransmission Ty und die Transmission im Bereich von 360 nm bis 460 nm, während gleichzeitig auch Yellowness Index und Trübung gegenüber dem Referenzbeispiel 1V, also einer entsprechenden Polycarbonat-Zusammensetzung ohne Squalan, reduziert sind.

## Patentansprüche

1. LED-Beleuchtungseinheit, umfassend eine LED-Lichtquelle mit einer Peakwellenlänge im Bereich von 360 bis 460 nm und ein Formteil aus einer transparenten oder transluzenten thermoplastischen Zusammensetzung, enthaltend
a) thermoplastisches Polymer,
b) 10 - 2500 ppm eines oder mehrerer Phosphor-basierter Thermostabilisatoren, ausgewählt aus der Gruppe, bestehend aus Phosphaten, Phosphiten, Phosphoniten, Phosphinen sowie deren Mischungen,
c) 200 ppm bis 4500 ppm eines oder mehrerer verzweigter aliphatischer Kohlenwasserstoffe,
d) 100 ppm bis 4000 ppm eines oder mehrerer Entformungsmittel auf Basis eines Fettsäureesters,
wobei die Mengenangaben in ppm sich jeweils auf das Gesamtgewichts an thermoplastischem Polymer beziehen.

2. LED-Beleuchtungseinheit nach einem der vorhergehenden Ansprüche, wobei die Zahl der Kohlenstoffatome, die der oder die Kohlenwasserstoffe gemäß Komponente c aufweist/aufweisen, 20 bis 80 beträgt und Methylgruppen als Verzweigungen vorliegen.

3. LED-Beleuchtungseinheit nach Anspruch 2, wobei der Gewichtsanteil der Methylgruppen als Verzweigungen 10 bis 30 Gew.-%, bezogen auf die Kohlenstoffatome der Kette, beträgt.

4. LED-Beleuchtungseinheit nach einem der vorhergehenden Ansprüche, wobei als thermoplastisches Polymer aromatisches Polycarbonat enthalten ist.

5. LED-Beleuchtungseinheit nach einem der vorhergehenden Ansprüche, wobei der bzw. die Kohlenwasserstoffe gemäß Komponente c aus verknüpften Farnesaneinheiten aufgebaut sind.

6. LED-Beleuchtungseinheit nach einem der vorhergehenden Ansprüche, wobei als Komponente c mindestens Squalan enthalten ist.

7. LED-Beleuchtungseinheit nach einem der vorhergehenden Ansprüche, wobei als Thermostabilistor gemäß Komponente b mindestens Triphenylphosphin enthalten ist.

8. LED-Beleuchtungseinheit nach einem der vorhergehenden Ansprüche, wobei als Entformungsmittel gemäß Komponenten d mindestens Glycerinmonostearat enthalten ist.

9. LED-Beleuchtungseinheit nach einem der vorhergehenden Ansprüche, wobei die Zusammensetzung außerdem ein phenolisches Antioxidans in einer Menge von 50 ppm bis 1000 ppm enthält.

10. LED-Beleuchtungseinheit nach einem der vorhergehenden Ansprüche, wobei die Menge an Komponente b 200 bis 1000 ppm und die Menge an Komponente d) 150 bis 500 ppm beträgt.

11. LED-Beleuchtungseinheit nach einem der vorhergehenden Ansprüche, wobei das von der LED-Beleuchtungseinheit ausgesandte Licht eine Farbtemperatur, bestimmt nach DIN EN 12665:2009, von 2500 K bis 7000 K aufweist.

12. LED-Beleuchtungseinheit nach einem der vorhergehenden Ansprüche, wobei das Formteil eine Kratzfestbeschichtung aufweist.

13. LED-Beleuchtungseinheit nach einem der vorhergehenden Ansprüche, wobei die thermoplastische Zusammensetzung aus
a) aromatischem Polycarbonat,
b) 10 - 2500 ppm eines oder mehreren Phosphor-basierter Thermostabilisatoren, ausgewählt aus der Gruppe, bestehend aus Phosphaten, Phosphiten, Phosphoniten, Phosphinen sowie deren Mischungen,
c) 200 ppm bis 4500 ppm eines oder mehrerer verzweigter aliphatischen Kohlenwasserstoffe, wobei als verzweigter aliphatischer Kohlenwasserstoff Squalan enthalten ist,
d) 100 ppm bis 4000 ppm eines oder mehrerer Entformungsmitteln auf Basis eines Fettsäureesters,
e) 0 ppm bis 1000 ppm eines oder mehrerer phenolischer Antioxidantien,
f) 0 ppm bis 6000 ppm eines oder mehrerer UV-Absorber,
g) 0 ppm bis 500.000 ppm eines oder mehrerer weiterer Additive, ausgewählt aus der Gruppe, bestehend aus von Komponente e verschiedene Antioxidantien, von Komponente d verschiedenen Entformungsmitteln, Flammschutzmitteln, Antitropfmitteln, von Komponente b verschiedenen Stabilisatoren, optischen Aufhellern, Lichtstreumitteln, Farbmitteln,
besteht, wobei die Mengenangaben in ppm sich jeweils auf das Gesamtgewichts an thermoplastischem aromatischen Polycarbonat beziehen,
besteht.

14. Verwendung von verzweigten aliphatischen Kohlenwasserstoffen zur Erhöhung der Lichttransmission im Bereich von 360 bis 460 nm einer auf einem thermoplastischen Polymer basierenden thermoplastischen Zusammensetzung.

15. Verwendung gemäß Anspruch 14, wobei aromatisches Polycarbonat als thermoplastisches Polymer in der Zusammensetzung enthalten ist und als verzweigter aliphatischer Kohlenwasserstoff Squalan eingesetzt wird.
